# EUROPEAN PATENT APPLICATION

(11) **EP 0 915 273 A2**
(43) Date of publication of application: **12.05.1999**
(21) Application number: 98118159.7
(22) Date of filing: 24.09.1998
(51) Int. Cl.: F16J 15/12

(54) **Dual sealing gasket**

(30) Priority: 04.11.1997 US 964183
(71) Applicant: Penberthy, Inc., Prophetstown, Illinois 61277-1147 (US)
(72) Inventor: Sanders, Gary G., Rock Falls, Illinois 61071 (US)
(74) Representative: Winter, Brandl, Fürniss, Hübner, Röss, Kaiser, Polte, Kindermann Partnerschaft

(57) **Abstract**

A gasket (20, 120, 320, 520, 620, 720) is provided for sealing two juxtaposed members. The gasket has a top layer (24, 124, 324, 524, 624, 724) of standard compression gasketing material and a bottom layer (26, 126, 326, 526, 626, 726) of standard compression gasketing material. In between the two layers of standard compression gasketing material is a metal layer (34, 134, 334, 534, 634, 734) of material. The two layers of standard compression gasketing material are bonded to the metal material by an adhesive. The combination of the two layers of standard compression gasketing material with the metal layer of material creates a compression seal. Bonded adjacent one side of the compression seal is a pressure-activated (44) or spring-activated, pressure-assisted (144, 344, 544) seal. The pressure-activated seal is formed by a layer of elastomeric or polymeric material shaped to form two protruding members partially enclosing and defining an opening. The opening is provided on the side of the material opposite the side adjacent the compression seal. The spring-activated, pressure-assisted seal is formed by placing a spring member within the opening of the elastomeric or polymeric material. The metal layer is the substrate for the compression seal and provides support for the pressure-activated or spring-activated, pressure-assisted seal. The gasket is useful for industrial applications requiring extremely low leakage characteristics.

## Description

### FIELD OF THE INVENTION

The present invention relates generally to gaskets, and in particular, to compression (a.k.a. flat static) gasket applications where gasketing simultaneously provides both a pressure-activated, or spring-activated, pressure-assisted seal and a compression seal for extremely low leakage characteristics.

### BACKGROUND OF THE INVENTION

Recent environmental concerns and regulations regarding particularly hazardous materials, such as the Clean Air Act Amendments 1990 (CAAA-90) have prompted the need for gasketing with extremely low leakage characteristics. For example, the United States Environmental Protection Agency is requiring that leakage of methane be limited to less than 10,000 ppm initially, then changing eventually to a requirement of less than 500 ppm. Even more stringent rules are being enacted locally.

Compression (a.k.a flat static) gasketing is well known for use as a replaceable member for sealing areas and passageways between two juxtaposed members. The sealing capability of a compression gasket depends upon the application of sufficient compressive loading to (i) allow the gasket to fill the irregularities on the surfaces of the juxtaposed sealed members; (ii) close any interstitial porosity in the gasketing material; and (iii) withstand extrusion caused by the fluidic i.e., hydrostatic or pneumostatic, force of the contained fluid.

A partial list of materials in common usage as compression gasketing includes cellulose (paper), leather, cork, elastomers, polymers, graphite and easily malleable metals. To aid anti-extrusion strength in the softer materials, fibrous fillers are often included. Some common examples of fibrous fillers are asbestos, glass fibers, aramid fibers and carbon fibers. On the one hand, the softer materials allow good conformability to the sealed members and compression reduction of interstitial spaces; however, they provide little resistance to extrusion. On the other hand, the harder materials, including those with fibrous fillers, tend to resist extrusion reasonably well but do not conform or seal as easily.

Another known sealing method is the pressure-activated seal. This method does not primarily depend upon sealed member compression to effect a seal. Essentially, the sealed members are formed in a manner that allows close contact across flats and an intermediate cavity into which a preformed seal, usually elastomeric or polymeric, is placed. As pressure is applied, the preformed seal changes shape to fill any small voids between flats. A common example is the O-ring.

In contrast to most compression seals, pressure-activated seals require special housing or preparation of the surfaces of the members to be sealed. For example, using an O-ring as a seal requires that a groove be machined or otherwise provided for holding the O-ring. Often the special requirements for pressure-activated seals are complex, causing higher probability of error and higher costs.

An extension of the pressure-activated sealing method is the spring-activated, pressure assisted seal. This is essentially the same as the aforementioned pressure-activated seal with the addition of a spring member (spiral wound or 'c' section metallic or cylindrical rings of an elastomer or polymer) placed into the formed sealing member to force close contact across flats, filling any small voids between flats.

The compression, pressure-activated, and spring-activated, pressure assisted seals, though effective in many gasketing applications, are not sufficient, due to shortcomings identified above, to meet new demands for extremely low leakage applications in a cost effective manner. Therefore, a need exists for a new and substantially improved gasket with extremely low leakage characteristics.

### SUMMARY OF THE INVENTION

Accordingly, it is an object of the present invention to provide a gasket with extremely low leakage characteristics.

It is a further object of the present invention to provide a gasket that simultaneously provides a compression seal and a pressure-activated/assisted seal for structures designed for compression sealing and consequently to provide extremely low leakage characteristics and a back-up sealing member if the primary seal should fail.

These and other objects are accomplished by the present invention which provides a dual sealing gasket. The gasket has a first layer of metal material having both a top surface and a bottom surface. The metal material provides strength, support and anti-extrusion capabilities under compressive loading. A layer of standard compression gasketing material is bonded to the top surface of the layer of metal material and another layer of standard compression gasketing material is bonded to the bottom surface of the layer of metal material, thereby providing a metal material sandwiched between two layers of standard compression gasketing material. This sandwich of metal between layers of standard compression gasketing material provides a compression seal. A layer of elastomeric or polymeric material is bonded to the sandwiched metal material adjacent all layers of the sandwiched material on the inner perimeter, that is, the edge adjacent the fluid to be sealed. The layer of elastomeric or polymeric material is shaped such that when fluidic pressure is applied the material expands outward to contact the juxtaposed members, while being supported by the aforementioned compression gasket sandwich. Example shapes for the layer of elastomeric or polymeric material include a U-shape, V-shape or cup shape. The shaped elastomeric or polymeric material provides a pressure-activated seal that is reinforced by the compression seal provided by the sandwiched material. If a spring member is added to the opening of the pressure-activated seal, then a spring- activated, pressure-assisted seal is formed. Since the pressure-activated or spring-activated, pressure-assisted seal is mounted on the compression gasket sandwich, no special housing or preparation of the surface to be sealed is required, allowing deployment of spring-activated, pressure-assisted and pressure-activated seals in applications designed for compression seals.

### BRIEF DESCRIPTION OF THE DRAWINGS

FIG. 1 is a perspective view of a gage gasket in accordance with the present invention;
FIG. 2 is a cross-sectional view of the gasket shown in FIG. 1 taken along line 2-2;
FIG. 3 is a cross-sectional view of another embodiment of a gasket in accordance with the present invention wherein the gasket includes a solid cylindrical spring member;
FIG. 4 is a cross-sectional view of another embodiment of a gasket in accordance with the present invention, wherein the gasket includes a U-shaped spring member;
FIG. 4A is a perspective view of the U-shaped spring member shown in FIG. 4;
FIG. 5 is a cross-sectional view of another embodiment of a gasket in accordance with the present invention, wherein the gasket includes a spiral spring member;
FIG. 5A is a perspective view of the spiral spring member shown in FIG. 5;
FIG. 6 is a cross-sectional view of another embodiment of a gasket in accordance with the present invention, wherein the gasket includes a C-shaped spring member;
FIG. 6A is a perspective view of the C-shaped spring member shown in FIG. 6;
FIG. 7 is a cross-sectional view of another embodiment of a gasket in accordance with the present invention, wherein the gasket includes a V-shaped spring member;
FIG. 7A is a perspective view of the V-shaped spring member shown in FIG. 7;
FIG. 8 is a cross-sectional view of another embodiment of a gasket in accordance with the present invention, wherein the gasket includes a quad sealing member;
FIG. 9 is a top view of the metal layer of the gage gasket shown in FIG. 1;
FIG. 10 is another top view of the metal layer of the gage gasket of FIG. 9 showing additional details;
FIG. 11 is a top view of an alternate arrangement for the metal layer of the gage gasket of FIG. 1;
FIG. 12 is a perspective view of a flange gasket in accordance with the present invention;
FIG. 13 is a cross-sectional view of the flange gasket shown in FIG. 12 taken along line 13-13;
FIG. 14 is a cross-sectional view of another embodiment of a flange gasket in accordance with the present invention wherein the gasket includes a solid cylindrical spring member;
FIG. 15 is a perspective view of a liquid level gage incorporating a gasket in accordance with the present invention;
FIG. 16 is a cross-sectional view of the liquid level gauge shown in FIG. 15 taken along line 16-16; and
FIG. 17 is a sectional view of a flange arrangement for joining pipe and incorporating a gasket in accordance with the present invention.

### DETAILED DESCRIPTION OF THE PREFERRED EMBODIMENTS

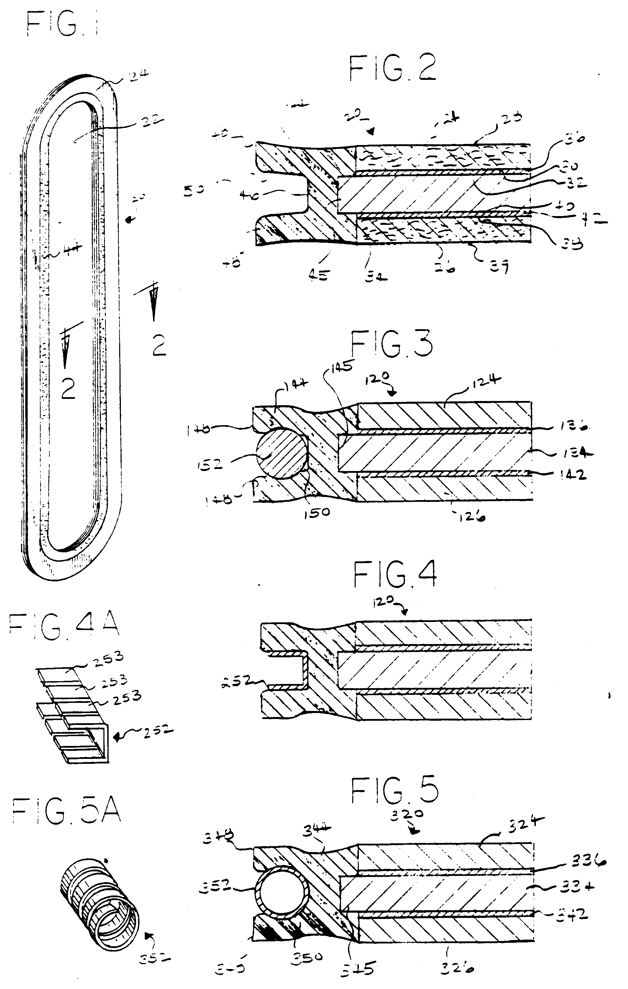

Referring now to the figures generally, and in particular to FIGS. 1 and 2, a gasket 20 is shown in accordance with the present invention in perspective and cross-sectional views, respectively. Gasket 20 may be used to seal members forming, for example, a liquid level gage. Gasket 20 has an opening 22 that is defined in accordance with the application in which the gasket will be used to seal two juxtaposed members. The shape of gasket 20 is also defined and limited only by its application. Gasket 20 has a generally planar configuration.

Gasket 20 has a top layer 24 and a bottom layer 26, both of standard compression gasketing material. Top layer 24 has an outer surface 28 and an inner surface 30. Inner surface 30 is opposite outer surface 28 and is laminated to a top surface 32 of a layer 34 of metal material. A thin layer 36 of adhesive is used in bonding top layer 24 to metal layer 34. Bottom layer 26 has an outer surface 39 and an inner surface 38. Inner surface 38 is opposite outer surface 39 and is laminated to a bottom surface 40 of metal layer 34. A thin layer 42 of adhesive is used in bonding bottom layer 26 to metal layer 34. The layers 24, 26 and 34 are used to provide a compression seal when between two juxtaposed members.

Adjacent layers 24, 26 and 34 is a layer 44 of an elastomeric or polymeric material. As best seen in FIG. 2, metal layer 34 extends slightly beyond layers 24 and 26 in the area adjacent layer 44 of elastomeric or polymeric material. This extension 45 of metal layer 34 allows the elastomeric or polymeric material to be readily bonded to metal layer 34. Layer 44 of elastomeric or polymeric material has a dual-edge configuration having two protruding members 48 opposite each other defining and partially enclosing an opening 50. Opening 50 is U-shaped, but other configurations will suffice, as discussed below. Layer 44 creates a pressure-activated seal when its interior side 46 is placed in contact with a fluid under pressure by providing an opening that reacts to the fluid.

FIG. 3 is a cross-sectional view of a gasket 120, similar to gasket 20, except gasket 120 is modified to include a spring-activated, pressure-assisted seal. This modification is accomplished by the addition of a spring member. Gasket 120 has a metal layer 134 sandwiched between top layer 124 and bottom layer 126 of gasketing material, both of the gasketing layers 124, 126 being adhesively bonded to metal layer 134 by thin layers of adhesive 136, 142. A layer 144 of elastomeric or polymeric material, similar to layer 44, is formed on extension 145 of layer 134 adjacent layers 124, 126. Two protruding portions 148 define a U-shaped opening 150 in layer 144. A spring member 152 is placed within the opening 150 to force portions of the perimeters of layer 144 outward, increasing the sealing capabilities. Spring member 152 is a solid cylindrical material or O-ring. Preferably spring member 152 is an elastomer or polymer.

FIG. 4 is another cross-section view of gasket 120 shown in FIG. 3. However, spring member 152 is replaced with a U-shaped spring member 252. FIG. 4A is a perspective view of U-shaped spring member 252. Preferably spring member 252 is metal and comprises a plurality of connected U-shaped segments 253 to facilitate shaping member 252 to the shape of the corresponding gasket 120.

FIG. 5 is a cross-sectional view of a gasket 320, similar to gasket 120, except gasket 320 has a cup-shaped opening for receiving a spring member. Gasket 320 has a metal layer 334 sandwiched between top layer 324 and bottom layer 326 of gasketing material, both of the gasketing layers 324, 326 being adhesively bonded to metal layer 334 by thin layers of adhesive 336, 342. A layer 344 of elastomeric or polymeric material, similar to layer 144 of gasket 120, is formed on extension 345 of layer 334 adjacent layers 324, 326. Layer 344 has a dual edge configuration having two protruding portions 348 defining a cup-shaped opening 350 in layer 344. A spring member 352 is placed within opening 350 to force portions of the perimeters of layer 344 outward, increasing the sealing capabilities of gasket 320. Spring member 352 is a helical or spiral spring made of metal. FIG. 5A is a perspective view of spring member 352.

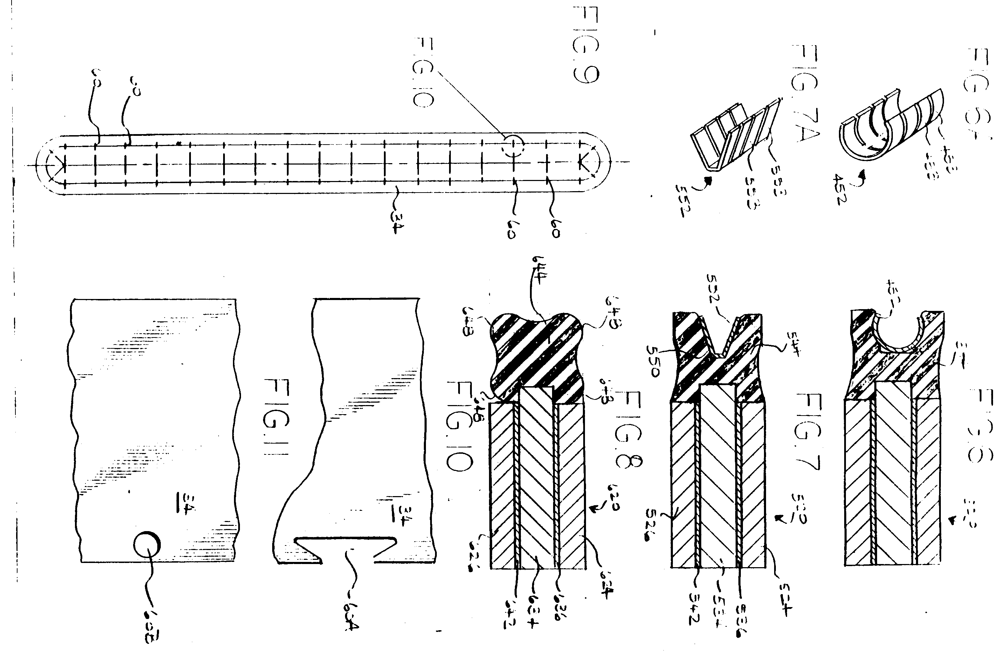

FIG. 6 is another cross-sectional view of gasket 320 shown in FIG. 5. However, spring member 352 is replaced with a C-shaped spring member 452. C-shaped member 452 may also be described as semicircular or arcuate. Preferably spring member 452 is metal and comprised of a plurality of similarly shaped connected C-shaped segments 453 to facilitate shaping member 452 to the shape of the corresponding gasket 320.

FIG. 7 is a cross-sectional view of a gasket 520, similar to gaskets 120 and 320, except gasket 520 has a V-shaped or chevron-shaped opening for receiving a spring member. Gasket 520 has a metal layer 534 sandwiched between top layer 524 and bottom layer 526 of gasketing material, both of the gasketing layers 524, 526 being adhesively bonded to metal layer 534 by thin layers of adhesive 536, 542. A layer 544 of elastomeric or polymeric material, similar to layers 44, 144 and 344, is formed on layer 534 adjacent layers 524, 526. Layer 544 is dual edge shaped having two protruding portions 548 defining a V-shaped or chevron-shaped opening 550 in layer 544. A spring member 552 is placed within the opening 550 to force portions of the perimeters of layer 554 outward. FIG. 7A is a perspective view of spring member 552. Preferably, spring member 552 is made of metal and comprised of a plurality of connected V-shaped segments 553 to facilitate shaping member 552 to the shape of the corresponding gasket 520.

FIG. 8 is a cross-sectional view of a gasket 620, similar to gaskets 20, 120, 320, 520, except gasket 620 has a quad edge shaped layer forming the pressure-activated seal. Gasket 620 has a metal layer 634 sandwiched between top layer 624 and bottom layer 626 of gasketing material, both of the gasketing layers 624, 626 being adhesively bonded to metal layer 634 by thin layers of adhesive 636, 642. A layer 644 of elastomeric or polymeric material is formed on layer 634 adjacent layers 624, 626. Layer 644 has a quad edge configuration with rounded protruding edges 648. Preferably layer 648 is made of an elastomeric or polymeric material.

FIG. 9 is a top view of metal layer 34 of gasket 20 prior to lamination of the top layer 24 and bottom layer 26 and prior to formation of layer 44 of elastomeric or polymeric material. Spaced along the interior perimeter of metal layer 34 are mechanical irregularities 60 used to enhance the bond between layer 44 of elastomeric or polymeric material and metal layer 34. The mechanical irregularities 60 may be slots, holes, etchants, dovetails or any other irregularity. The preferred irregularity is a dovetail 60A, as illustrated in detail in FIG. 10. FIG. 11 shows an alternate irregularity in the form of a hole or feed-through 60B. Metal layers 134, 334, 534 and 634 may have a similar configuration for bonding layers 144, 344, 544 and 644, respectively.

The layers 24, 124, 324, 524, 624 and 26, 126, 326, 526, 626 are desirable for chemical resistance and thermal stability. Preferably layers 24, 124, 324, 524, 624 and 26, 126, 326, 526, 626 are graphite but any gasketing material may be used, such as cellulose, leather, cork, elastomers, polymers and easily malleable metals. Most preferably, layers 24, 124, 324, 524, 624 and 26, 126, 326, 526, 626 are a flexible, high-density grade of sheet graphite material, i.e., graphite ribbon. A suitable graphite material is available from Union Carbide Corporation, and sold as GRAFOIL® Brand Flexible Graphite, grade GTA or GTB.

Metal layers 34, 134, 334, 534, 634 are desirable for strength and durability, providing a substrate for the pressure-activated seal or spring-activated, pressure-assisted seal, as well as the compression seal. Any suitable metal substrate may be used for metal layers 34, 134, 334, 534, 634. A preferred metal substrate is 316 stainless steel.

Elastomeric or polymeric layers 44, 144, 344, 544, 644 may be formed using any suitable elastomer or polymer. A preferred elastomeric material is a fluorocarbon rubber. Suitable fluorocarbon rubbers are available from E. I. DuPont De Nemours sold under the trademark VITON® or from 3M Co. sold under the trademark FLUOREL®. Preferred polymeric materials are polytetrafluoroethylene ("PTFE") or fluorinated ethylene propylene ("FEP"), which are available from E. I. duPont De Nemours and Company sold under the general trademark TEFLON®. Other suitable materials for layers 44, 144, 344, 544 and 644 include butadiene, isoprene, chloroprene, urethane and many other similar elastomers or polymers.

Layers 24, 26 and metal layer 34 may be laminated together using any suitable adhesive and a curing or bonding process at appropriate temperature and pressure. A similar process may be used for joining the other layers 124, 126, 324, 326, 524, 526, 624, 626 of gasketing material to their respective metal layers 134, 334, 534, 634. A preferred adhesive is a very thin layer of a mixture of thermoplastic methacrylate and thermoset phenolic polymer adhesives.

Elastomeric or polymeric layer 44 is bonded to metal layer 34 during its curing (vulcanizing) process. A similar process may be used for bonding elastomeric or polymeric layers 144, 344, 544, 644 to their respective metal layers 134, 334, 534, 634. Mechanical irregularities preferably enhance the bonding.

The thickness of gasket 20 in general may vary. In the preferred embodiment, the thickness of both the gasketing layers is 0.032" and the thickness of the metal layer is 0.042", yielding a total thickness of 0.106". This allows adequate height for an easily fabricated geometry yielding an effective pressure-activated or spring-activated, pressure-assisted sealing member.

FIGS. 12 and 13 show a circular gasket 720 in accordance with the present invention in perspective and cross-sectional views, respectively. Gasket 720 may be useful in sealing a flange used, for example, to join pipe. Gasket 720 has an opening 722 that is defined in accordance with the application in which the gasket is used to seal two juxtaposed members. Gasket 720 has a generally planar configuration.

Like gasket 20, gasket 720 has dual sealing capability, incorporating a compression seal with a pressure-activated seal. The compression seal portion of gasket 720 is formed by metal layer 734 being sandwiched between top layer 724 of gasketing material and bottom layer 726 of gasketing material. Top layer 724 of gasketing material is affixed to metal layer 734 by a thin adhesive 736. Similarly, bottom layer 726 is affixed to the opposite side of metal layer 734 by a thin layer of adhesive 742.

The pressure-activated sealing portion of gasket 720 is formed by layer 744 of elastomeric or polymeric material. Metal layer 734 has an extended portion 745 upon which elastomeric or polymeric layer 744 is bonded. On the side of layer 744 opposite the compression seal, a U-shaped opening 750 is formed by two protrusions 748. The opening 750 is placed in contact with a fluid to be contained under pressure by the gasket, providing an opening that favorably reacts to the fluid to be sealed. On the side of the compression seal opposite the pressure-activated seal, metal layer 734 has an extension 735 that extends beyond top and bottom layers 724, 726 of gasketing material. Extension 735 may be used as a guide to position gasket 720 in particular, within the bolt circle of a flange, as discussed below with respect to FIG. 17.

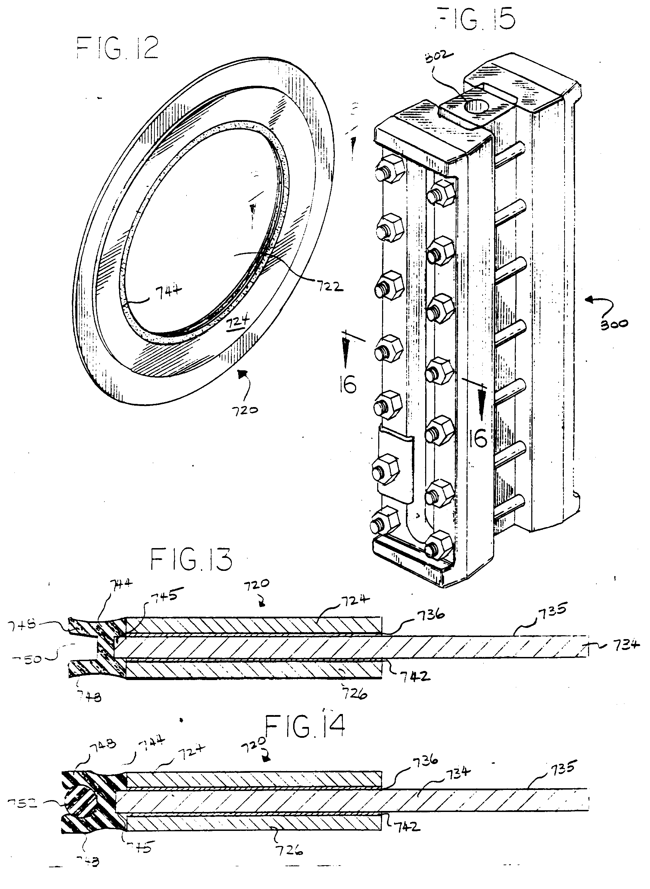

FIG. 14 is a cross-sectional view of gasket 720, modified to include a spring-activated, pressure-assisted seal. This modification is accomplished by the addition of spring member 752 shown in the form of an O-ring.

The gasket arrangements shown in FIGS. 12-14 may be formed using the methods and materials discussed above with respect to gaskets 20, 120, 320, 520 and 620. In addition, different permutations of the arrangement for the layer of elastomeric or polymeric material and the associated spring members are applicable to gasket 720.

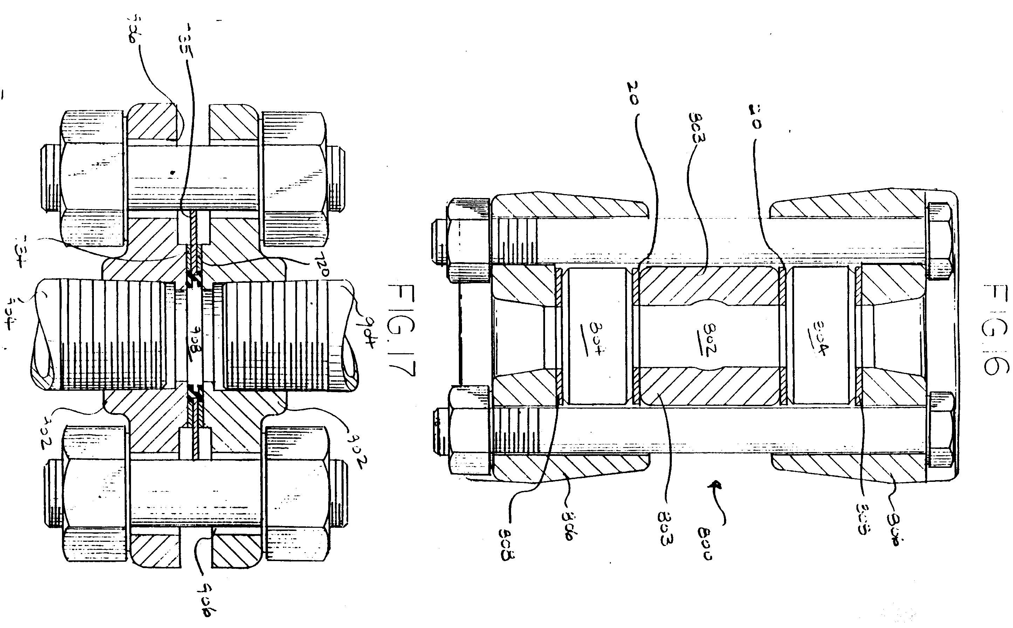

FIGS. 15 and 16 show a liquid level gage (commonly called sight or gage glass in the industry) incorporating a gasket in accordance with the present invention in perspective and cross-sectional views, respectively. Liquid level gages are primarily for use in observing fluid levels for industrial applications, for example, the fractional distillation of petroleum. A liquid level gage requires a narrow width gasket. The geometry of gasketing required is rectangular with radiused ends. The gasket must seal metal to glass at high fluidic pressures and temperatures.

Gage 800 has a liquid chamber 802 for holding the liquid to be measured. Chamber 802 is formed by two opposite and spaced metal members 803 enclosed by two opposite glass members 804. Glass members 804 allow the liquid level inside chamber 802 to be visibly observed. Gaskets 20 are placed between glass members 804 and metal members 803 to seal chamber 802. Of course gaskets 120, 320, 520, 620 may also be used. Glass members 804 are held in place by cover portions 806, which are bolted together. Cushions 808 are positioned between glass members 804 and cover portions 806 to protect glass members 804. Metal members 803 and cover portions 806 may be made of steel and glass members 804 may be transparent or reflex glass. Similar gages, commonly called sight flow indicators, usually circular, may be attached to in-line piping in industrial applications.

FIG. 17 is a sectional view of a flange arrangement for joining pipe. The arrangement incorporates a flange gasket 720 made in accordance with the present invention. The flange arrangement includes two flange members 902, each with bores for receiving pipes 904. Bolt holes 906 are provided in the flange members 902 for receiving bolts to secure the flange members 902 together. Disposed between the flange members 902 is gasket 720 for sealing the liquid chamber 908 formed by the flange arrangement. The extension 735 of metal layer 734 of gasket 720 extends to the bolt holes 906 to abut against the bolts and align flange gasket 720 appropriately in the flange arrangement.

Described herein is a gasket that is especially suited for providing low leakage characteristics when sealing two juxtaposed members. Low leakage characteristics are provided by a pressure-activated or spring-activated, pressure-assisted seal in combination with a compression seal. A metal layer has graphite ribbon laminated to its two opposed surfaces for a compression seal and a polymeric or elastomeric layer laminated adjacent a side of the metal layer for a pressure-activated seal. A spring member may be added to the elastomeric or polymeric layer for a spring-activated, pressure-assisted seal.

Gaskets in accordance with the present invention provide superior sealing qualities. Using a dual sealing gasket in accordance with the invention to replace a compression gasket may provide six to eight orders of magnitude improvement in leakage characteristics. For example, prototype gage gaskets made in accordance with the invention with 27.55 inches of linear sealing, averaged air equivalent leakage of 1.08 x 10⁻⁹ atm-cc/sec/linear inch (atmospheric cubic centimeters per second per linear inch) of gasketing at 1500 pounds per square inch gage (psig) internal pressure and 1.30 x 10⁻⁹ atm-cc/sec/linear inch of gasketing at 2500 psig internal pressure, measured using helium mass spectrometry leak detection. For comparison purposes, GRAFOIL® grade GHP graphite ribbon gasketing averaged air equivalent leakage of 8.71 x 10⁻⁴ atm-cc/sec/ linear inch at 1500 psig internal pressure and Lydall D-7301 NOBESTOS® gasketing averaged air equivalent leakage of 2.21 x 10⁻¹ atm-cc/sec/ linear inch at 1500 psig internal pressure.

While the present invention has been described with respect to specific embodiments thereof, it will be understood that various changes and modifications will be suggested to one skilled in the art and it is intended that the invention encompass such changes and modifications as fall within the scope of the appended claims.

## Claims

1. A gasket comprising:
a first layer of metal material having a top surface and a bottom surface;
a second layer of compression gasketing material having an inner surface and an outer surface, said inner surface of said second layer being bonded to said top surface of said first layer of metal material;
a third layer of compression gasketing material having an inner surface and an outer surface, said inner surface of said third layer being bonded to said bottom surface of said first layer of metal material; and
a fourth layer of elastomeric or polymeric material, said fourth layer being bonded adjacent said first, second and third layers on a side and on an opposite side having two opposite protruding members partially enclosing and defining an opening.

2. The gasket of claim 1 wherein said first layer of metal material comprises stainless steel.

3. The gasket of claim 1 wherein said second layer of gasketing material comprises graphite ribbon.

4. The gasket of claim 3 wherein said third layer of gasketing material comprises graphite ribbon.

5. The gasket of claim 1 further comprising a spring member within said opening in said fourth layer of elastomeric or polymeric material.

6. The gasket of claim 5 wherein said spring member is an O-ring.

7. The gasket of claim 5 wherein said spring member is a C-shaped metal member.

8. The gasket of claim 5 wherein said spring member is an U-shaped metal member.

9. The gasket of claim 5 wherein said spring member is a V-shaped member.

10. The gasket of claim 5 wherein said spring member is a spiral spring.

11. The gasket of claim 1 wherein said second and third layers of gasketing material comprises cellulose.

12. The gasket of claim 11 wherein said second and third layers of gasketing material comprises leather.

13. The gasket of claim 11 wherein said second and third layers of gasketing material comprises cork.

14. The gasket of claim 11 wherein said second and third layers of gasketing material comprises an elastomer.

15. The gasket of claim 11 wherein said second and third layers of gasketing material comprises a polymer.

16. The gasket of claim 11 wherein said second and third layers of gasketing material comprises graphite.

17. The gasket of claim 11 wherein said second and third layers of gasketing material comprises a malleable metal.

18. The gasket of claim 1 wherein each of said second and third layers of compression gasketing material is 0.032 inches thick.

19. The gasket of claim 1 wherein said first layer of metal material is 0.042 inches thick.

20. The gasket of claim 1 wherein said fourth layer is comprised of fluorocarbon rubber.

21. The gasket of claim 20 wherein said fourth layer is comprised of butadiene.

22. The gasket of claim 20 wherein said fourth layer is comprised of isoprene.

23. The gasket of claim 20 wherein said fourth layer is comprised of chloroprene.

24. The gasket of claim 20 wherein said fourth layer is comprised of urethane.

25. The gasket of claim 1 wherein said fourth layer is comprised of polytetrafluoroethylene.

26. The gasket of claim 1 wherein said fourth layer is comprised of fluorinated ethylene propylene.

27. The gasket of claim 1 wherein said first layer extends beyond said second and third layers in an area adjacent said fourth layer.

28. The gasket of claim 1 wherein said first layer extends beyond said second and third layers in an area opposite said fourth layer.

29. A gasket comprising:
a compression seal having a metal substrate laminated to at least one layer of gasketing material; and
a pressure-activated seal having a first side, said first side being bonded to said metal substrate adjacent said compression seal.

30. The gasket of claim 29 wherein said pressure-activated seal has two protrusions extending on a second side opposite said first side, said two protrusions defining and partially enclosing an opening.

31. The gasket of claim 30 further including a spring member affixed within said opening.

32. The gasket of claim 29 wherein said pressure-activated seal has a quad-edge configuration.
